(19) 

Europäisches Patentamt

European Patent Office

Office européen des brevets

(11) **EP 4 299 601 B1**

(12) **EUROPEAN PATENT SPECIFICATION**

(45) Date of publication and mention
of the grant of the patent:
**22.04.2026 Bulletin 2026/17**

(21) Application number: **22759262.3**

(22) Date of filing: **31.01.2022**

(51) International Patent Classification (IPC):
**C08F 8/00** (2006.01)     **C08F 214/26** (2006.01)
**H01B 7/02** (2006.01)     **B29C 45/00** (2006.01)

(52) Cooperative Patent Classification (CPC):
(C-Sets available)
**C09D 127/18; C08F 8/22; C08F 214/262;
H01B 3/445;** B29C 45/0001     (Cont.)

(86) International application number:
**PCT/JP2022/003635**

(87) International publication number:
**WO 2022/181221 (01.09.2022 Gazette 2022/35)**

(54) **COPOLYMER, MOLDED BODY, INJECTION MOLDED BODY, AND COATED ELECTRICAL WIRE**

COPOLYMER, FORMKÖRPER, SPRITZGUSSKÖRPER UND BESCHICHTETER ELEKTRISCHER DRAHT

COPOLYMÈRE, CORPS MOULÉ, CORPS MOULÉ PAR INJECTION ET FIL ÉLECTRIQUE ENROBÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031087**
**30.09.2021 JP 2021162114**

(43) Date of publication of application:
**03.01.2024 Bulletin 2024/01**

(73) Proprietor: **DAIKIN INDUSTRIES, LTD.
Osaka-Shi, Osaka 530-0001 (JP)**

(72) Inventors:
• **ISAKA, Tadaharu
Osaka-shi, Osaka 530-0001 (JP)**

• **ZENKE, Yumi
Osaka-shi, Osaka 530-0001 (JP)**
• **YAMAMOTO, Yukari
Osaka-shi, Osaka 530-0001 (JP)**
• **TSUDA, Hayato
Osaka-shi, Osaka 530-0001 (JP)**
• **YAMAGUCHI, Yasuyuki
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
EP-A1- 1 462 458     WO-A1-03/048214
JP-A- 2019 214 641     JP-A- 2020 100 843
JP-A- H03 184 209

**(Cont. next page)**

(52) Cooperative Patent Classification (CPC): (Cont.)

C-Sets
**C08F 8/22, C08F 214/262;**
**C08F 214/262, C08F 216/1408**

**Description**

TECHNICAL FIELD

The present disclosure relates to a copolymer, a formed article, an injection molded article, and a coated electric wire.

BACKGROUND ART

Patent Document 1 describes a forming material for an ozone-resistant article, comprising a copolymer (A) and having a melt flow rate of 0.1 to 50 g/10 min, wherein the copolymer (A) is a copolymer comprising tetrafluoroethylene and perfluorovinylether and containing 3.5% by mass or more of a perfluorovinylether unit, and having a melting point of 295°C or higher, and 50 or more unstable terminal groups per $1 \times 10^6$ carbon atoms in the copolymer (A). Patent Document 2 discloses copolymers of tetrafluoroethylene and a perfluoro(alkyl vinyl ether). These polymers are used to coat electric wires and articles are prepared from these polymers by injection moulding.

RELATED ART

PATENT DOCUMENT

   Patent Document 1: International Publication No. WO 2003 / 048214
   Patent Document 2: JP 2019214641 A

SUMMARY OF THE INVENTION

PROBLEM TO BE SOLVED BY THE INVENTION

An object of the present disclosure is to provide a copolymer that is capable of easily providing a visually attractive injection molded article having a relatively large projected area by being molded by injection molding, that hardly corrodes a metal mold to be used for molding, that is capable of forming an extremely thick coating layer having a uniform thickness on a core wire having an extremely large diameter by extrusion forming, and that is capable of providing a formed article which has a small haze value, which has excellent 100°C mechanical strength, 150°C abrasion resistance, oxygen low permeability, chemical solution low permeability, extremely long-term ozone resistance, creep resistance, high-temperature rigidity, and non-stickiness, and which also hardly makes fluorine ions to dissolve out in a chemical solution such an electrolytic solution.

MEANS FOR SOLVING THE PROBLEM

According to the present disclosure, there is provided a copolymer comprising tetrafluoroethylene unit and perfluoro(propyl vinyl ether) unit, wherein the copolymer has a content of perfluoro(propyl vinyl ether) unit of 4.4 to 6.0% by mass with respect to the whole of the monomer units, a melt flow rate at 372°C of 7.5 to 11.0 g/10 min, and the number of functional groups of 40 or less per $10^6$ main-chain carbon atoms.

According to the present disclosure, an injection molded article comprising the copolymer is further provided.

According to the present disclosure, a coated electric wire having a coating layer comprising the copolymer is further provided.

According to the present disclosure, a formed article comprising the copolymer, wherein the formed article is a flowmeter housing, a film, a bottle, an electric wire coating, or a tube is further provided.

EFFECTS OF INVENTION

According to the present disclosure, there can be provided a copolymer that is capable of easily providing a visually attractive injection molded article having a relatively large projected area by being molded by injection molding, that hardly corrodes a metal mold to be used for moldign, that is capable of forming an extremely thick coating layer having a uniform thickness on a core wire having an extremely large diameter by extrusion forming, and that is capable of providing a formed article which has a small haze value, which has excellent 100°C mechanical strength, 150°C abrasion resistance, oxygen low permeability, chemical solution low permeability, extremely long-term ozone resistance, creep resistance, high-temperature rigidity, and non-stickiness, and which also hardly makes fluorine ions to dissolve out in a chemical solution such as an electrolytic solution.

DESCRIPTION OF EMBODIMENTS

Hereinafter, specific embodiments of the present disclosure be described in detail, but the present disclosure is not limited to the following embodiments.

The copolymer of the present disclosure contains tetrafluoroethylene (TFE) unit and perfluoro(propyl vinyl ether) (PPVE) unit.

The copolymer (PFA) containing TFE unit and PPVE unit is used as a piping member for transferring a chemical solution, and a flowmeter member for measuring the flow rate of a chemical solution. From the viewpoint of making it easy to check the chemical solution present inside the piping member or the flowmeter member, as a material for forming these, a demand exists for a material capable of providing a visually attractive formed article, the generation of surface roughness and flow marks on which is suppressed even when molding is carried out by injection molding using a metal mold equipped with a side gate, and which has a small haze value. Also, the piping member and the flowmeter member are used, for example, to transfer, and to measure the flow rate of, a chemical solution having a temperature of approximately 100°C and, thus, as a material for forming these, a demand exists for a material capable of providing a formed article having excellent high-temperature abrasion resistance, high-temperature rigidity, oxygen low permeability, chemical solution low permeability, and 100°C mechanical property. Moreover, stress is repeatedly applied to the piping member and the flowmeter member as a flow of a chemical solution is started or stopped or as the flow rate is changed and, thus, as a material for forming these, a demand exists for a material capable of providing a formed article having excellent creep resistance.

In Patent Document 1, the forming material for an ozone-resistant article having the above characteristics is described as being a forming material having excellent ozone resistance while maintaining the chemical resistance, heat resistance, and mechanical property of fluororesin. Recently, a demand exists for a forming material having better properties than the forming material for an ozone-resistant article described in Patent Document 1 and, in particular, a demand exists for a material capable of providing a visually attractive formed article, the generation of surface roughness and flow marks on which is suppressed even when molding is carried out by injection molding using a metal mold equipped with a side gate, and which has improved oxygen low permeability and chemical solution low permeability. On the other hand, attempts to improve injection moldability or to improve oxygen low permeability and chemical solution low permeability result in the problem of poor 100°C mechanical property, high-temperature abrasion resistance, and long-term ozone resistance.

It has been found that by suitably regulating the content of PPVE unit, the melt flow rate (MFR), and the number of functional groups of a copolymer containing TFE unit and PPVE unit, the formability of the copolymer is significantly improved, a visually attractive formed article can be obtained even when molding is carried out by injection molding using a metal mold equipped with a side gate and, at the same time, the metal mold to be used for forming is hardly corroded. Besides, it has been also found that by using such a copolymer, a formed article is obtained that has a small haze value, that has excellent 100°C mechanical strength, 150°C abrasion resistance, oxygen low permeability, chemical solution low permeability, extremely long-term ozone resistance, creep resistance, high-temperature rigidity, and non-stickiness and, also, that hardly makes fluorine ions to dissolve out in a chemical solution such as an electrolytic solution.

In addition, by forming the copolymer of the present disclosure by extrusion forming, an extremely thick coating layer having a uniform thickness can be formed on a core wire having an extremely large diameter. Thus, the copolymer of the present disclosure can be utilized not only as a material for a piping member and a flowmeter member, but also in a broad range of applications such as electric wire coating.

The copolymer of the present disclosure is a melt-fabricable fluororesin. The being melt-fabricable means that it is possible to melt and process a polymer by using a conventional processing device such as an extruder or an injection molding machine.

The content of the PPVE unit of the copolymer is 4.4 to 6.0% by mass with respect to the whole of the monomer units. The content of the PPVE unit of the copolymer is preferably 4.5% by mass or higher, more preferably 4.6% by mass or higher, still more preferably 4.7% by mass or higher, further still more preferably 4.8% by mass or higher, especially preferably 4.9% by mass or higher, and most preferably 5.0% by mass or higher, and is preferably 5.9% by mass or lower, more preferably 5.8% by mass or lower, still more preferably 5.7% by mass or lower, and especially preferably 5.6% by mass or lower. Due to that the content of the PPVE unit of the copolymer is in the above range, a formed article can be obtained that has a small haze value, that has excellent 100°C mechanical strength, 150°C abrasion resistance, oxygen low permeability, chemical solution low permeability, extremely long-term ozone resistance, creep resistance, high-temperature rigidity, and non-stickiness and, also, that hardly makes fluorine ions to dissolve out in a chemical solution such as an electrolytic solution. When the content of the PPVE unit of the copolymer is excessively small, a formed article that has a small haze value and that has excellent 150°C abrasion resistance, extremely long-term ozone resistance, and 100°C mechanical strength cannot be obtained. When the content of the PPVE unit of the copolymer is excessive large, a formed article that has excellent oxygen low permeability, chemical solution low permeability, high-temperature rigidity, and creep resistance cannot be obtained.

The content of the TFE unit of the copolymer is, with respect to the whole of the monomer units, preferably 94.0 to 95.6% by mass, more preferably 94.1% by mass or higher, still more preferably 94.2% by mass or higher, further still more preferably 94.3% by mass or higher, and especially preferably 94.4% by mass or higher, and more preferably 95.5% by mass or lower, still more preferably 95.4% by mass or lower, further still more preferably 95.3% by mass or lower, further especially preferably 95.2% by mass or lower, especially preferably 95.1% by mass or lower, and most preferably 95.0% by mass or lower. Due to that the content of the TFE unit of the copolymer is in the above range, a formed article can be obtained that has a small haze value, that has excellent 100°C mechanical strength, oxygen low permeability, chemical solution low permeability, creep resistance, high-temperature rigidity, and non-stickiness, and that hardly makes fluorine ions to dissolve out in a chemical solution such as an electrolytic solution. When the content of the TFE unit of the copolymer is excessively large, possibly a formed article that has a small haze value and that has excellent 150°C abrasion resistance and 100°C mechanical strength cannot be obtained. When the content of the TFE unit of the copolymer is excessively small, possibly a formed article that has excellent oxygen low permeability, chemical solution low permeability, high-temperature rigidity, and creep resistance cannot be obtained.

In the present disclosure, the content of each monomer unit in the copolymer is measured by a $^{19}$F-NMR method.

The copolymer can also contain a monomer unit originated from a monomer copolymerizable with TFE and PPVE. In this case, the content of the monomer unit copolymerizable with TFE and PPVE, with respect to the whole of the monomer units of the copolymer, is preferably 0 to 1.6% by mass, more preferably 0.05 to 1.4% by mass, and still more preferably 0.1 to 1.0% by mass.

The monomer copolymerizable with TFE and PPVE include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 7.5 to 11.0 g/10 min. The MFR of the copolymer is preferably 8.0 g/10 min or higher, more preferably 8.5 g/10 min or higher, and still more preferably 9.0 g/10 min or higher, and is preferably 10.9 g/10 min or lower, more preferably 10.0 g/10 min or lower, still more preferably 9.5 g/10 min or lower, and especially preferably 9.0 g/10 min or lower. When the MFR of the copolymer is excessively low, it may be difficult to obtain a visually attractive injection molded article by being molded by injection molding, and possibly the obtained molded article may have poor high-temperature rigidity, oxygen low permeability, and chemical solution low permeability. When the MFR of the copolymer is excessively high, it may be difficult to form an extremely thick coating layer having a uniform thickness on a core wire having an extremely large diameter by extrusion forming, and possibly the obtained formed article may have poor 150°C abrasion resistance, extremely long-term ozone resistance, 100°C mechanical strength, and creep resistance.

Due to that the content of the PPVE unit, the melt flow rate (MFR), and the number of functional groups of the copolymer containing the TFE unit and the PPVE unit are suitably regulated, the copolymer of the present disclosure can be formed by injection molding and also can be formed by extrusion forming for electric wire coating. While a copolymer that becomes sufficiently flowable by being heated is suitable for injection molding, an attempt to form a coating layer on an electric wire having a large coating thickness by using a copolymer having an excessively high flowability at high temperatures may result in a large variation in outer diameters. Even when the copolymer of the present disclosure is formed by injection molding, a visually attractive injection molded article can be obtained, and even when the copolymer of the present disclosure is formed by extrusion forming for electric wire coating, a coated electric wire, the variation in the outer diameter of which is small, can be obtained.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 40 or less. The number of functional groups per $10^6$ main-chain carbon atoms of the copolymer is preferably 30 or less, more preferably 20 or less, still more preferably 15 or less, especially preferably 10 or less, and most preferably less than 6. Due to that the number of functional groups of the copolymer is in the above range, it can be made more difficult for metal molds in forming using the metal molds to be corroded. Further, a formed article can be obtained that has excellent extremely long-term ozone resistance, non-stickiness, and low permeability to a chemical solution such as an electrolytic solution, and that hardly makes fluorine ions to dissolve out in a chemical solution such as an electrolytic solution. In particular, by suitably regulating the content of the PPVE unit, the melt flow rate (MFR), and the number of functional groups of the copolymer containing the TFE unit and the PPVE unit, a formed article exhibiting excellent low permeability to various chemical solutions such as dimethyl carbonate and methyl ethyl ketone can be obtained.

For identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of functional groups per $1 \times 10^6$ carbon atoms in the copolymer is calculated according to the following formula (A).

$$N = I \times K/t \cdots (A)$$

I: absorbance

K: correction factor

t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

**Table 1**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, -CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of the functional groups may be the total number of -CF=CF$_2$, -CF$_2$H, - COF, -COOH, -COOCH$_3$, -CONH$_2$ and -CH$_2$OH.

The functional groups are introduced to the copolymer by, for example, a chain transfer agent or a polymerization initiator used for the production of the copolymer. For example, in the case of using an alcohol as the chain transfer agent, or a peroxide having a structure of $-CH_2OH$ as the polymerization initiator, $-CH_2OH$ is introduced on the main chain terminals of the copolymer. Alternatively, the functional group is introduced on the side chain terminal of the copolymer by polymerizing a monomer having the functional group.

By subjecting a copolymer having such a functional group to a fluorination treatment, a copolymer having the number of functional groups within the above range can be obtained. That is, the copolymer of the present disclosure is preferably one which has been subjected to the fluorination treatment. Also, the copolymer of the present disclosure preferably has - $CF_3$ terminal groups.

The melting point of the copolymer is preferably 295 to 315°C, more preferably 298°C or higher, still more preferably 300°C or higher, especially preferably 301°C or higher, and most preferably 302°C or higher, and is more preferably 308°C or lower. Due to that the melting point is in the above range, there can be obtained the copolymer giving formed articles better in mechanical property particularly at high temperatures (e.g., 100°C).

In the present disclosure, the melting point can be measured by using a differential scanning calorimeter [DSC].

The copolymer of the present disclosure preferably has a haze value of 11.5% or less, more preferably 11% or less, still more preferably 10.5% or less, and especially preferably 10% or less. Due to that the haze value is in the above range, it is easy to observe the inside of the formed article by visual observation or a camera and the like, and thus easy to check the flow rate and the residual quantity of the contents, when a formed article such as a pipe, a joint, or a flowmeter housing is obtained. In the present disclosure, the haze value can be measured according to JIS K 7136.

The copolymer of the present disclosure preferably has a tensile strength at 100°C of 19.5 MPa or higher, and more preferably 20 MPa or higher. Due to that the tensile strength at 100°C is in the above range, even when the obtained formed article is used as a member that is brought into contact with a chemical solution at a high temperature, thermal deformation of the formed article can be more suppressed, thus the service life of the member can be more extended, and a cost reduction by reduced replacement frequency can be further possible. In addition, even when pressure is applied from a high-temperature fluid, deformation of and damage to the formed article are prevented, and thus a high-temperature fluid can be circulated at a high flow rate. In the present disclosure, tensile strength at 100°C can be measured according to ASTM D638. The tensile strength can be raised by regulating the content of the PPVE unit, the melt flow rate (MFR), and the number of functional groups of the copolymer.

The oxygen permeability coefficient of the copolymer is preferably 920 $cm^3 \cdot mm/(m^2 \cdot 24\ h \cdot atm)$ or less. Due to that the content of the PPVE unit, the melt flow rate (MFR), and the number of functional groups of the copolymer containing the TFE unit and the PPVE unit are suitably regulated, the copolymer of the present disclosure has excellent oxygen low permeability. Accordingly, a formed article formed of the copolymer hardly permeates oxygen and, thus, a piping member and a flowmeter member obtained using the copolymer of the present disclosure can suitably be used to transfer a chemical solution, the oxidation of which should be avoided.

In the present disclosure, the oxygen permeability coefficient can be measured under the condition of a test temperature of 70°C and a test humidity of 0% RH. Specific measurement of the oxygen permeability coefficient can be carried out by a method described in Examples.

The electrolytic solution permeability of the copolymer is preferably 7.5 $g \cdot cm/m^2$ or lower. Due to that the content of the PPVE unit, the melt flow rate (MFR), and the number of functional groups of the copolymer containing the TFE unit and the PPVE unit are suitably regulated, the copolymer of the present disclosure has excellent electrolytic solution low permeability. That is, by using the copolymer of the present disclosure, a formed article that hardly makes a chemical solution such as an electrolytic solution to permeate can be obtained.

In the present disclosure, the electrolytic solution permeability can be measured under the condition of a temperature of 60°C and for 30 days. Specific measurement of the electrolytic solution permeability can be carried out by the method described in the Examples.

The methyl ethyl ketone (MEK) permeability of the copolymer is preferably 72.0 $mg \cdot cm/m^2 \cdot day$ or lower. Due to that the content of the PPVE unit, the melt flow rate (MFR), and the number of functional groups of the copolymer containing the TFE unit and the PPVE unit are suitably regulated, the copolymer of the present disclosure has excellent MEK low permeability. Thus, by using the copolymer of the present disclosure, a formed article that hardly allows a chemical solution such as MEK to permeate can be obtained.

In the present disclosure, the MEK permeability can be measured under the condition of a temperature of 60°C and for 60 days. Specific measurement of the MEK permeability can be carried out by a method described in Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower, and still more preferably 0.7 ppm or lower. Due to that the amount of fluorine ions dissolving out is in the above range, the generation of gases such as HF in a non-aqueous electrolyte battery can be more suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm × 15 mm × 0.2 mm) of the copolymer, and putting a glass-made sample bottle in which the test piece and 2 g of dimethyl carbonate (DMC) have been charged in a thermostatic chamber at 80°C and allowing the resultant to stand for 144 hours.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can be suitably set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by $[(RfCOO)\text{-}]_2$ wherein Rf is a perfluoroalkyl group, an $\omega$-hydroperfluoroalkyl group, or a fluorochloroalkyl group.

Examples of the di[fluoro(or fluorochloro)acyl] peroxides include di($\omega$-hydro-dodecafluorohexanoyl) peroxide, di($\omega$-hydro-tetradecafluoroheptanoyl) peroxide, di($\omega$-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$-hydrododecafluoroheptanoyl-$\omega$-hydrohexadecafluorononanoyl peroxide, $\omega$-chloro-hexafluorobutyryl-$\omega$-chloro-decafluorohexanoyl peroxide, $\omega$-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant of the compound to be used, but is usually in the range of 0.01 to 20% by mass with respect to the solvent in the polymerization.

The solvent may be water and mixed solvents of water and an alcohol.

In the suspension polymerization, in addition to water, a fluorinated solvent may be used. The fluorosolvent include hydrochlorofluoroalkanes such as $CH_3CClF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluroalkanes such as $CF_3CFHCFHCF_2CF_3$, $CF_2HCF_2CF_2CF_2CF_2H$ and $CF_3CF_2CF_2CF_2CF_2CF_2CF_2H$; hydrofluoroethers such as $CH_3OC_2F_5$, $CH_3OC_3F_5$ $CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_2CF_3$, and among these, perfluoroalkanes are preferred. The amount of the fluorinated solvent to be used is, from the viewpoint of suspensibility and economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning, and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in the form of powder by drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder, or a tandem extruder and cutting the resultant into a predetermined length to form the copolymer into pellets. The extrusion temperature in the melt extrusion needs to be varied depending on the melt viscosity and the production method of the copolymer, and is preferably from the melting point of the copolymer +20°C to the melting point of the copolymer +140°C. A method of cutting the copolymer is not limited, and a conventionally known method can be adopted such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water at 30 to 200°C, steam at 100 to 200°C or hot air at 40 to 200°C.

Alternatively, the copolymer obtained by the polymerization may be subjected to fluorination treatment. The fluorination treatment can be carried out by bringing the copolymer having been no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$, and -CONH$_2$ and thermally relatively stable functional groups thereof, such as - CF$_2$H can be converted to thermally extremely stable -CF$_3$. Consequently, the total number (the number of functional groups) of -COOH, -COOCH$_3$, -CH$_2$OH, -COF, -CF=CF$_2$, -CONH$_2$ and -CF$_2$H of the copolymer can easily be controlled in the above-mentioned range.

The fluorine-containing compound is not limited, and includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF and halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and, as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and can be suitably used as a forming material. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-described properties, the copolymer is preferably used as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. As the forming method, among these, preferable are extrusion forming, compression molding, injection molding and transfer molding; more preferable are injection molding, extrusion forming, and transfer molding from the viewpoint of being able to produce formed articles in a high productivity, and still more preferable is injection molding. That is, it is preferable that formed articles are preferable are extrusion formed articles, compression formed articles, injection molded articles or transfer formed articles; and from the viewpoint of being able to produce formed articles in a high productivity, being injection molded articles, extrusion formed articles, or transfer formed articles is more preferable, and being injection molded articles is still more preferable. By forming the copolymer of the present disclosure by injection molding, an injection molded article having an attractive appearance can be obtained without corroding the metal mold to be used for forming.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flow meter, a pump, a wafer carrier, and a wafer box.

The copolymer of the present disclosure, the above composition, and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste transport;

members for high-temperature liquid transport, such as tubes and hoses for high-temperature liquid transport;

members for steam piping, such as tubes and hoses for steam piping;

corrosion-proof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosion-proof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed article further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed article containing the copolymer of the present disclosure has a small haze value, has excellent 100°C mechanical strength, 150°C abrasion resistance, oxygen low permeability, chemical solution low permeability, extremely long-term ozone resistance, creep resistance, high-temperature rigidity, and non-stickiness, also, hardly makes fluorine ions to dissolve out in a chemical solution such as an electrolytic solution, and thus can suitably be used as a nut, a bolt, a joint, a packing, a valve, a cock, a connector, a filter housing, a filter cage, a flow meter, a pump, or the like. Among these, the formed article can suitably be utilized as a piping member (in particular, a joint) used to transfer a chemical solution or as a flowmeter housing having a flow path for a chemical solution in a flowmeter. The piping member and the flowmeter housing of the present disclosure has a small haze value and has excellent 100°C mechanical strength, 150°C abrasion resistance, oxygen low permeability, chemical solution low permeability, extremely long-term ozone resistance, creep resistance, high-temperature rigidity, and non-stickiness. Accordingly, the piping member and the flowmeter housing of the present disclosure have excellent inside-visibility and, especially in the flowmeter housing, enables the float inside to be easily observed by visual observation or a camera and the like and can suitably be used in measuring the flow rate of a chemical solution at approximately 100°C. Moreover, the piping member and the flowmeter housing of the present disclosure can be easily produced by injection molding without corroding a metal mold to be used for forming, and has an attractive appearance.

The formed article containing the copolymer of the present disclosure can be easily produced by injection molding without corroding a metal mold, has excellent 100°C mechanical strength and non-stickiness, hardly makes fluorine ions to dissolve out in a chemical solution such as an electrolytic solution, and thus can suitably be used as a member to be compressed such as a gasket or a packing. The member to be compressed of the present disclosure may be a gasket or a packing. The gasket or packing of the present disclosure can be inexpensively produced by injection molding without corroding a metal mold, and is hardly damaged even when installed in a place where opening and closing are repeated highly frequently.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptical shape, a corner-rounded square or the like, and may be a shape having a through-hole in the central portion thereof.

It is preferable that the members to be compressed of the present disclosure are used as members constituting a non-aqueous electrolyte batteries. Due to that the members to be compressed of the present disclosure hardly make fluorine ions to dissolve out in an electrolytic solution, the members are especially suitable as members used in a state of contacting with a non-aqueous electrolyte in the non-aqueous electrolyte batteries. That is, the members to be compressed of the present disclosure may also ones having a liquid-contact surface with a non-aqueous electrolyte in the non-aqueous electrolyte batteries.

The members to be compressed of the present disclosure hardly make fluorine ions dissolve out in non-aqueous electrolytes. Therefore, by using the members to be compressed of the present disclosure, the rise in the fluorine ion concentration in the non-aqueous electrolytes can be suppressed. Consequently, by using the members to be compressed of the present disclosure, the generation of gases such as HF in the non-aqueous electrolyte can be suppressed, and the deterioration and the shortening of the service life of the battery performance of the non-aqueous electrolyte batteries can be suppressed.

From the viewpoint that the members to be compressed of the present disclosure can more suppress the generation of gases such as HF in non-aqueous electrolytes, and can more suppress the deterioration and the shortening of the service life of the battery performance of non-aqueous electrolyte batteries, the amount of fluorine ions dissolving out to be detected in an electrolytic solution immersion test is, in terms of mass, preferably 1.0 ppm or smaller, more preferably 0.8 ppm or less and still more preferably 0.7 ppm or smaller. The electrolytic solution immersion test can be carried out by preparing a test piece having a weight corresponding to 10 sheets of a formed article (15 mm $\times$ 15 mm $\times$ 0.2 mm) using a member to be compressed, and putting a glass-made sample bottle in which the test piece and 2 g of dimethyl carbonate (DMC) have been charged in a thermostatic chamber at 80°C and allowing the sample bottle to stand for 144 hours.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be $LiClO_4$, $LiAsF_6$, $LiPF_6$, $LiBF_4$, LiCl, LiBr, $CH_3SO_3Li$, $CF_3SO_3Li$, cesium carbonate and the like.

The members to be compressed of the present disclosure can suitably be utilized, for example, as sealing members such as sealing gaskets or sealing packings, and insulating members such as insulating gaskets and insulating packings. The sealing members are members to be used for preventing leakage of a liquid or a gas, or penetration of a liquid or a gas from the outside. The insulating members are members that to be used for insulate electricity. The members to be compressed of the present disclosure may be members to be used for the purpose of both of sealing and insulation.

The member to be compressed of the present disclosure has excellent 100°C mechanical strength and non-stickiness, hardly makes fluorine ions to dissolve out in an electrolytic solution, and thus can suitably be used as a sealing member for a non-aqueous electrolyte battery or an insulating member for a non-aqueous electrolyte battery. For example, in the charge time of batteries such as non-aqueous electrolyte secondary batteries, the temperature of the batteries temporarily may become 40°C or higher. Even when the members to be compressed of the present disclosure are used by being deformed at high temperatures and at a high compression deformation rate, and, moreover are brought into contact with non-aqueous electrolytes at high temperatures, in batteries such as non-aqueous electrolyte batteries, a high rebound resilience is not impaired. Therefore, the member to be compressed of the present disclosure, in the case of being used as sealing members, have the excellent sealing property and also at high temperatures, retain the sealing property for a long term. Further, the members to be compressed of the present disclosure, due to containing the above copolymer, have the excellent insulating property. Therefore, in the case of using the members to be compressed of the present disclosure insulating members, the members firmly adhere to two or more electrically conductive members and prevent short circuit over a long term.

Since an extremely thick coating layer having a uniform thickness can be formed on a core wire having an extremely large diameter by forming the copolymer of the present disclosure by extrusion forming, the copolymer of the present disclosure can suitably be used as a material for forming an electric wire coating. Accordingly, the coated electric wire provided with a coating layer containing the copolymer of the present disclosure has excellent electric property because the outer diameter is barely varied.

In an attempt to form an extremely thick coating layer having a uniform thickness on a core wire having an extremely large diameter, it takes time for a melted coating layer to solidify, also the weight of the coating layer is large, and therefore the use of a conventional copolymer is problematic in that the coating layer deforms under its own weight before it solidifies, and that it is difficult to form a coating layer having a uniform thickness. By using the copolymer of the present disclosure, an extremely thick coating layer having a uniform thickness can be formed.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to high-frequency transmission cables, flat cables, heat-resistant cables and the like, and particularly to high-frequency transmission cables.

As a material for the core wire, for example, a metal conductor material such as copper or aluminum can be used. The core wire preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, and is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, and is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher and further still more preferably 35% or higher. The upper limit is not limited, and is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) × 100. The foaming ratio can be suitably regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a molten state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, and examples thereof include printed wiring boards of electronic circuits for cell phones, various computers, communication devices and the like. As the formed article (2), antenna covers are preferable in that the dielectric loss is low.

The copolymer of the present disclosure can be formed by injection molding to obtain a visually attractive sheet. Also, the formed articles containing the copolymer of the present disclosure has excellent 100°C mechanical strength and non-stickiness. Accordingly, the formed article containing the copolymer of the present disclosure can suitably be utilized as a film or a sheet.

In particular, the film of the present disclosure has excellent non-stickiness. Accordingly, even when the film of the present disclosure and a resin such as epoxy resin, a toner, or the like are heat pressed, they do not adhere to each other, and the resin, toner, or the like can be separated from the film.

The film of the present disclosure is useful as a release film. The release films can be produced by forming the copolymer of the present disclosure by melt extrusion forming, calendering, press molding, casting or the like. From the viewpoint that uniform thin films can be obtained, the release films can be produced by melt extrusion forming.

The film of the present disclosure can be applied to the surface of a roll used in OA devices. The copolymer of the present disclosure is formed into required shapes, such as sheets, films, or tubes, by extrusion forming, compression molding, press molding or the like, and can be used as surface materials for OA device rolls, OA device belts and the like. Thin-wall tubes and films can be produced particularly by melt extrusion forming.

The formed article containing the copolymer of the present disclosure has a small haze value, has excellent 100°C mechanical strength, 150°C abrasion resistance, oxygen low permeability, chemical solution low permeability, extremely long-term ozone resistance, creep resistance, high-temperature rigidity, and non-stickiness, also, hardly makes fluorine ions to dissolve out in an electrolytic solution, and thus can suitably be utilized as a bottle or a tube. The bottle or the tube of the present disclosure enables the contents to be easily viewed, and is hardly damaged during use.

So far, embodiments have been described, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in Examples was measured by the following methods.

(Content of monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisakusho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that was completely fluorinated and had no functional groups was obtained. From an absorption peak of a specific functional group observed on this difference spectrum, the number N of the functional group per $1 \times 10^6$ carbon atoms in a sample was calculated according to the following formula (A):

$$N = I \times K/t \ \cdots \ (A)$$

I: absorbance
K: correction factor
t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

**Table 2**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation), and the melting point was determined from a melting curve peak observed in the second temperature raising step.

Example 1

26.6 L of pure water was charged in a 174 L- volume autoclave; nitrogen replacement was sufficiently carried out; thereafter, 30.4 kg of perfluorocyclobutane, 1.40 kg of perfluoro(propyl vinyl ether) (PPVE) and 0.31 kg of methanol were charged; and the temperature in the system was held at 35°C and the stirring speed was held at 200 rpm. Then, tetrafluoroethylene (TFE) was introduced to a pressure up to 0.58 MPa, and thereafter 0.010 kg of a 50% methanol solution of di-n-propyl peroxydicarbonate was charged to initiate polymerization. Since the pressure in the system decreased along with the progress of the polymerization, TFE was continuously supplied to maintain make the pressure constant, and 0.048 kg of PPVE was added for every 1 kg of TFE supplied and the polymerization was continued for 6.5 hours. TFE was released to return the pressure in the autoclave to the atmospheric pressure, and thereafter, an obtained reaction product was washed with water and dried to thereby obtain 15 kg of a powder.

The obtain powder was melt extruded at 360°C with a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of $F_2$ gas introduction and vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 1.48 kg, changing the charged amount of methanol to 0.34 kg, and adding 0.050 kg of PPVE for every 1 kg of TFE supplied. The results are shown in Table 3.

Example 3

Fluorinated pellets were obtained as in Example 1, except for changing the charged amount of PPVE to 1.68 kg, changing the charged amount of methanol to 0.29 kg, adding 0.056 kg of PPVE for every 1 kg of TFE supplied, changing the polymerization time to 7 hours, changing the heating temperature of the vacuum vibration-type reactor to 170°C, and changing the reaction condition to at a temperature of 170°C and for 5 hours. The results are shown in Table 3.

Example 4

Fluorinated pellets were obtained as in Example 1, except for changing the amount of pure water to 49.0 L, perfluorocyclobutane to 40.7 kg, PPVE to 2.01 kg, and methanol to 0.42 kg, introducing TFE under pressure up to 0.64 MPa, adding 0.041 kg of a 50% methanol solution of di-n-propyl peroxydicarbonate, adding 0.059 kg of PPVE for every 1 kg of TFE supplied, and changing the polymerization time to 18.5 hours to obtain 30 kg of a powder. The results are shown in Table 3.

Comparative Example 1

Fluorinated pellets were obtained as in Example 1, except for changing the charged amount of PPVE to 1.76 kg, changing the charged amount of methanol to 0.21 kg, adding 0.058 kg of PPVE for every 1 kg of TFE supplied, and changing the polymerization time to 7 hours. The results are shown in Table 3.

Comparative Example 2

51.8 L of pure water was charged in a 174 L-volume autoclave; nitrogen replacement was sufficiently carried out; thereafter, 40.9 kg of perfluorocyclobutane, 1.85 kg of perfluoro(propyl vinyl ether) (PPVE) and 3.36 kg of methanol were charged; and the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make the pressure constant, and 0.043 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 41.0 kg of a powder.

By using the obtained powder, the fluorination reaction was carried out as in Example 1 to thereby obtain fluorinated pellets. The results are shown in Table 3.

Comparative Example 3

Fluorinated pellets were obtained as in Comparative Example 2, except for changing the charged amount of PPVE to 2.88 kg, changing the charged amount of methanol to 1.56 kg, and adding 0.060 kg of PPVE for every 1 kg of TFE supplied. The results are shown in Table 3.

Comparative Example 4

Non-fluorinated pellets were obtained as in Comparative Example 2, except for changing the charged amount of PPVE to 2.43 kg, changing the charged amount of methanol to 1.75 kg, and adding 0.053 kg of PPVE for every 1 kg of TFE supplied.

The obtained pellets were put in a vacuum vibration-type reactor VVD-30 (manufactured by OKAWARA MFG. CO., LTD.) and replaced sufficiently by $N_2$ gas, and a mixed gas of $F_2$ gas and $N_2$ gas ($F_2$ gas concentration of 10% by volume) was allowed to flow through at a flow rate of 1.0 L/min for 3 hours. The reactor was heated to 170°C, and a reaction was carried out for 2 hours. After the reaction was finished, heating was terminated, and the gas was switched to $N_2$ gas to replace sufficiently the $F_2$ gas for approximately 1 hour. The temperature at that time was 30°C. Then, a mixed gas of ammonia gas and $N_2$ gas (ammonia gas concentration of 50% by volume) was allowed to flow through at a flow rate of 2.0 L/min for 30 min for ammonia gas treatment. The temperature was room temperature (approximately 30°C). After treatment, $N_2$ gas was allowed to flow until the outlet gas became neutral, and the reactor was then exposed to air. The obtained pellets were used to measure various physical properties by the methods described above. The results are shown in Table 3.

Comparative Example 5

Fluorinated pellets were obtained as in Comparative Example 2, except for changing the charged amount of PPVE to 3.47 kg, changing the charged amount of methanol to 3.28 kg, changing the charged amount of the 50% methanol solution of di-n-propyl peroxydicarbonate to 0.026 kg, and adding 0.071 kg of PPVE for every 1 kg of TFE supplied to thereby obtain 43.8 kg of a dry powder. The results are shown in Table 3.

[Table 3]

**Table 3**

| | PPVE content (% by mass) | MFR (g/10 min) | Number of functional groups (groups/C$10^6$) | Melting point (°C) |
|---|---|---|---|---|
| Example 1 | 4.6 | 7.5 | <6 | 303 |
| Example 2 | 4.8 | 8.5 | <6 | 302 |
| Example 3 | 5.3 | 9.5 | 27 | 302 |
| Example 4 | 5.6 | 11.0 | <6 | 302 |
| Comparative Example 1 | 5.5 | 6.4 | <6 | 302 |
| Comparative Example 2 | 4.1 | 10.0 | <6 | 304 |
| Comparative Example 3 | 5.7 | 12.5 | <6 | 302 |
| Comparative Example 4 | 5.0 | 10.0 | 60 | 302 |

(continued)

|  | PPVE content (% by mass) | MFR (g/10 min) | Number of functional groups (groups/C10$^6$) | Melting point (°C) |
|---|---|---|---|---|
| Comparative Example 5 | 6.6 | 9.0 | <6 | 298 |

The description "<6" in Table 3 means that the number of functional groups is less than 6.

Then, by using the obtained pellets, the following properties were evaluated. The results are shown in Table 4.

(Haze value)

By using pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO., LTD.).

(Tensile strength (TS) at 100°C)

Tensile strength at 100°C was measured according to ASTM D638.

(Injection moldability)

· Conditions

The copolymer was injection-molded by using an injection molding machine (IS130FI, manufactured by Toshiba Machine Co., Ltd.) set at a cylinder temperature of 390°C, a metal mold temperature of 200°C, and an injection rate of 5 mm/s. As a metal mold, a metal mold (130 mm × 130 mm × 3 mmt, side gate, flow length from the gate exceeding 130 mm) obtained by Cr-plated HPM38 was used. The obtained injection molded article was observed and evaluated according to the following criteria. The presence/absence of surface roughness was checked by touching the surface of the injection molded articles.

3: The entire surface is smooth, and no flow marks are observed on the entire molded article
2: Roughness is confirmed on the surface within 1 cm from where the gate of the metal mold was located, but in other areas, the entire surface is smooth, and no flow marks are observed on the entirety of the molded article
1: Roughness is confirmed on the surface within 1 cm from where the gate of the metal mold was located, and a flow mark can be observed within 1 cm from where the gate of the metal mold was located, but in other areas, the entire surface is smooth, and no flow marks are observed
0: Roughness is confirmed on the surface within 4 cm from where the gate of the metal mold was located, and a flow mark can be observed within 4 cm from where the gate of the metal mold was located

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a formed article of approximately 0.2 mm in thickness. Thereafter, by using the obtained formed article, test pieces of 15-mm square were prepared.

10 sheets of the obtained test pieces and 2 g of dimethyl carbonate (DMC) were put in a 20-mL glass sample bottle, and the cap of the sample bottle was closed. The sample bottle was put in a thermostatic chamber at 80°C, and allowed to stand for 144 hours to thereby immerse the test pieces in DMC. Thereafter, the sample bottle was taken out from the thermostatic chamber, and cooled to room temperature; then, the test pieces were taken out from the sample bottle. DMC remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatograph system; and the amount of fluorine ions in the aqueous solution was measured by an ion chromatograph system (manufactured by Thermo Fisher Scientific Inc., Dionex ICS-2100).

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of aluminum foil. The glass container was put in an oven as is and heated at 380°C for 3 hours. Thereafter, the heated glass container was taken out from the oven, and cooled to room temperature; and the degree of corrosion of the surface of the metal post was visually observed. The degree of corrosion was judged based on the following criteria.

Good: no corrosion observed
Fair: corrosion slightly observed
Poor: corrosion observed

(Electric wire coating test)

Extrusion coating in the following coating thickness was carried out on a copper conductor of 1.00 mm in conductor diameter by a 30-mm$\varphi$ electric wire coating forming machine (manufactured by Tanabe Plastics Machinery Co., Ltd.), to thereby obtain a coated electric wire was obtained. The extrusion conditions for the electric wire coating were as follows.

a) Core conductor: 1.00 mm in conductor diameter
b) Coating thickness: 0.50 mm
c) Coated electric wire diameter: 2.00 mm
d) Electric wire take-over speed: 7 m/min
e) Extrusion condition:

· Cylinder screw diameter = 20 mm, a single-screw extruder of L/D = 22 · Die (inner diameter)/tip (outer diameter) = 30.0 mm/10.0 mm

Set temperature of the extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(Variation of outer diameter)

The outer diameter of the obtained coated electric wire was continuously measured for 1 hour using a diameter measuring head (ODAC 18XY manufactured by Zumbach). Among the measured outer diameter values, the outer diameter value that most deviated from the predetermined outer diameter value (2.00 mm) was rounded off to the third decimal place to determine a variation value of the outer diameter. The ratio (the outer diameter variation ratio) of the absolute value of the difference between the predetermined outer diameter (2.00 mm) and the outer diameter variation value to the predetermined outer diameter was calculated, and evaluated according to the following criteria.

(Outer diameter variation ratio (%)) = | (outer diameter variation value) - (predetermined outer diameter) | / (predetermined outer diameter) $\times$ 100

$\pm$1%: outer diameter variation ratio being 1% or less
$\pm$2%: outer diameter variation ratio being greater than 1% and 2% or less
Poor: outer diameter variation ratio being greater than 2%

(Toner release test)

A $\varphi$14 mm extruder (manufactured by Imoto machinery Co., Ltd.) and a T die were used to produce a film. The extrusion conditions were as follows.

a) Take-up speed: 1 m/min
b) Roll temperature: 120°C
c) Film width: 70 mm
d) Thickness: 0.10 mm
e) Extrusion condition:

· Cylinder screw diameter = 14 mm, a single-screw extruder of L/D = 20 Set temperature of the extruder: barrel section C-1 (330°C), barrel section C-2 (350°C), barrel section C-3 (370°C), T die section (380°C)

A test piece having 50 mm × 50 mm was cut out from the resulting film having a thickness of 0.10 mm, the obtained test piece was laid on an SUS vat, 3 g of a black toner powder was spread in a circular shape of approximately 30 mm in diameter onto the test piece, the lid of the vat was closed, and with the inside being an isolated space, the vat was put in a thermostatic chamber heated to 160°C. After 10 minutes, the vat was taken out, and after allowing to cool to room temperature, the test piece was taken out from the vat. Melt-solidified matter of the black toner was peeled off from the test piece, and the peeled surface of the test piece was visually observed and evaluated based on the following criteria.

Good: no black deposits observed on peeled surface of test piece
Poor: black deposits observed on peeled surface of test piece

(Abrasion test)

By using the pellets and a heat press molding machine, a sheet-shape test piece of approximately 0.2 mm in thickness was prepared, and a test piece having 10 cm × 10 cm was cut out therefrom. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under the condition of a test piece surface temperature of 150°C, a load of 500 g, an abrasion wheel CS-10 (rotationally polished in 20 rotations with an abrasive paper #240), and a rotation rate of 60 rpm. The weight of the test piece after 1,000 rotations was measured, and the same test piece was further subjected to the test of 5,000 rotations, and then the weight of the test piece was measured. The abrasion loss was determined by the following formula.

```
Abrasion loss (mg) = M1 - M2
```

M1: the weight of the test piece after 1,000 rotations (mg)
M2: the weight of the test piece after 5,000 rotations (mg)

(Oxygen permeability coefficient)

By using the pellets and a heat press molding machine, a sheet-shape test piece of approximately 0.1 mm in thickness was prepared. Using the resulting test piece, oxygen permeability was measured with a differential pressure type gas permeation meter (L100-5000 gas permeability meter, manufactured by Systech Illinois) according to the method described in JIS K7126-1:2006. The oxygen permeability value at a permeation area of 50.24 cm$^2$ at a test temperature of 70°C at a test humidity of 0% RH was obtained. The obtained oxygen permeability and the test piece thickness were used to calculate the oxygen permeability coefficient from the following equation.

Oxygen permeability coefficient (cm$^3$·mm/(m$^2$·24 h·atm)) = GTR × d

GTR: oxygen permeability (cm$^3$/(m$^2$·24 h·atm))
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with DMC, and held at a temperature of 60°C for 30 days, and thereafter, the test cup was taken out and allowed to stand at room temperature for 1 hour; thereafter, the amount of the mass lost was measured. The DMC permeability (g·cm/m$^2$) was determined by the following formula.

Electrolytic solution permeability (g·cm/m$^2$) = the mount of the mass lost (g) × the thickness of the sheet-shape test piece (cm) / the permeation area (m$^2$)

(Methyl ethyl ketone (MEK) permeability)

By using the pellets and a heat press molding machine, a sheet-shape test piece of approximately 0.1 mm in thickness was prepared. 10 g of MEK was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with MEK, and held at a temperature of 60°C for 60 days, thereafter the test cup was taken out and allowed to stand at room temperature for 1 hour, and then the amount of the mass lost was measured. The MEK permeability (mg·cm/m$^2$·day) was determined by the following formula.

MEK permeability (mg·cm/m$^2$·day) = [the amount of the mass lost (mg) $\times$ the thickness of the sheet-shape test piece (cm)] / [the permeation area (m$^2$)·number of days (day)]

(Rate of deflection at 95°C under load)

By using the pellets and a heat press molding machine, a sheet-shape test piece of approximately 3 mm in thickness was prepared, and a test piece having 80 $\times$ 10 mm was cut out therefrom and heated in an electric furnace at 100°C for 20 hours. Except that the resulting test piece was used, a test was carried out according to the method described in JIS K-K 7191-1 with a heat distortion tester (manufactured by YASUDA SEIKI SEISAKUSHO, LTD.) under conditions of a test temperature of 30 to 150°C, a temperature-increasing rate of 120°C/hour, a bending stress of 1.8 MPa, and a flatwise method. The rate of deflection under load was determined by the following formula. A sheet, the rate of deflection at 95°C under load of which is small, has excellent high-temperature rigidity.

$$\texttt{Rate of deflection under load (\%) = a2 / a1 × 100}$$

a1: thickness of specimen before test (mm)
a2: amount of deflection at 95°C (mm)

(Ozone exposure test)

The copolymer was compression-molded at 350°C under a pressure of 0.5 MPa to prepare a sheet of 1 mm in thickness, and a sheet having 10$\times$20 mm was cut out therefrom, which was regarded as a sample for an ozone exposure test. Ozone gas (ozone/oxygen = 10/90% by volume) produced by an ozone generator (trade name: SGX-A11MN (modified), manufactured by Sumitomo Precision Products Co., Ltd.) was connected to a PFA container containing ion-exchanged water, bubbled in ion-exchanged water to add water vapor to ozone gas, and then ion-exchanged water was passed through the sample-containing PFA cell at 0.7 liters/min at room temperature to expose the sample to wet ozone gas. The sample was taken out 180 days after the beginning of exposure, the surface was lightly rinsed with ion-exchanged water, a portion at a depth of 5 to 200 $\mu$m from the sample surface was observed with a transmission optical microscope of 100 magnification, an image was taken with a standard scale, the number of cracks having a length of 10 $\mu$m or more per mm$^2$ of the sample surface was measured, and evaluations were made according to the following criteria:

Good: 10 cracks or less
Poor: more than 10 cracks

(Creep resistance evaluation)

Creep resistance was measured according to the method described in ASTM D395 or JIS K6262:2013. By using the pellets and a heat press molding machine, a formed article of 13 mm in outer diameter and 8 mm in height was prepared. The obtained formed article was cut to prepare a test piece of 13 mm in outer diameter and 6 mm in height. The prepared test piece was compressed to a compression deformation rate of 25% at normal temperature by using a compression device. The compressed test piece being fixed on the compression device was allowed to stand still in an electric furnace at 80°C for 72 hours. The compression device was taken out from the electric furnace, and cooled to room temperature; thereafter, the test piece was dismounted. The collected test piece was allowed to stand at room temperature for 30 min, and the height of the collected test piece was measured and the extent of recovery was determined by the following formula.

$$\texttt{Extent of recovery (\%) = (t}_2 \texttt{ - t}_1\texttt{)/t}_3 \texttt{ × 100}$$

$t_1$: a height of a spacer (mm)
$t_2$: a height of the test piece dismounted from the compression device (mm)
$t_3$: a height after compressive deformation (mm)

In the above test, $t_1$ was 4.5 mm and $t_3$ was 1.5 mm.

(Tube formability)

By using the pellets obtained in the Examples, a tube of 10.0 mm in outer diameter and 1.0 mm in wall thickness was extruded by a $\varphi$30-mm extruder (manufactured by Tanabe Plastics Machinery Co., Ltd.).
The extrusion conditions were as follows.

a) Die inner diameter: 20 mm
b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition

· Cylinder screw diameter = 30 mm, a single-screw extruder of L/D = 22 Set temperature of extruder: barrel section C-1 (330°C), barrel section C-2 (365°C), barrel section C-3 (380°C), head section H-1 (380°C), die section D-1 (390°C), die section D-2 (390°C)
The obtained tube was observed and evaluated according to the following criteria. The appearance of the tube was visually checked.

Good: good appearance
Poor: poor appearance, e.g., the cross section is not circular by being flat or having uneven thickness

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured with a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent ($\tan\delta$) at 20°C at 6 GHz was determined.

[Table 4]

Table 4

| | Haze value | 100°C Tensile strength | Injection moldability | Electrolytic solution immersion test | Metal mold corrosion test | | Electric wire coating property | Toner release test | 150°C Abrasion resistance | Oxygen permeability coefficient | Electrolytic solution permeability | MEK permeability | Rate of deflection at 95°C under load | Ozone exposure test | Creep resistance evaluation | Tube formability | Dielectric tangent |
|---|---|---|---|---|---|---|---|---|---|---|---|---|---|---|---|---|---|
| | | | | Amount of fluorine ions dissolving out (ppm by mass) | HPM38 (Cr-plated) | HPM38 (Ni-plated) | Variation in outer diameter | Non-stickiness | | | | | | | Extent of recovery (%) | | |
| | (%) | (MPa) | | | | | | | (mg) | cm$^3$·mm /(m$^2$·24 h· atm) | (g·cm/m$^2$) | (mg cm /m$^2$·day) | (%) | 180 days | | | |
| Example 1 | 9.9 | 20.5 | 1 | 0.6 | Good | Good | ±1% | Good | 20.0 | 849 | 7.4 | 69.1 | 57% | Good | 26.9% | Good | 0.00039 |
| Example 2 | 9.6 | 20.0 | 2 | 0.6 | Good | Good | ±1% | Good | 20.7 | 856 | 7.4 | 69.0 | 58% | Good | 25.3% | - | 0.00039 |
| Example 3 | 9.5 | 20.0 | 3 | 0.6 | Good | Good | ±1% | Good | 20.7 | 899 | 7.5 | 71.6 | 62% | Good | 220% | - | 0.00046 |
| Example 4 | 9.3 | 20.0 | 3 | 0.6 | Good | Good | ±2% | Good | 21.4 | 898 | 7.3 | 70.0 | 64% | Good | 20.0% | - | 0.00040 |
| Comparative Example 1 | 8.3 | 21.5 | 0 | 0.6 | Good | Good | ±1% | Good | 17.3 | 950 | 7.8 | 73.1 | 67% | Good | 21.7% | - | 0.00041 |
| Comparative Example 2 | 11.3 | 18.0 | 3 | 0.6 | Good | Good | ±2% | Good | 23.6 | 772 | 7.0 | 65.6 | 50% | Poor | 29.1% | - | 0.00038 |
| Comparative Example 3 | 9.4 | 17.5 | 3 | 0.6 | Good | Good | Poor | Good | 22.6 | 897 | 7.3 | 69.5 | 64% | Poor | 18.9% | - | 0.00040 |
| Comparative Example 4 | 10.0 | 18.5 | 3 | 0.8 | Good | Good | ±2% | Poor | 21.7 | 883 | 8.2 | 75.0 | 59% | Poor | 20.3% | - | 0.00054 |
| Comparative Example 5 | 7.2 | 21.5 | 3 | 0.6 | Good | Good | ±1% | Good | 17.5 | 1011 | 7.8 | 74.7 | 76% | Good | 16.7% | - | 0.00042 |

## EP 4 299 601 B1

**Claims**

1. A copolymer, which is a fluorine-containing copolymer comprising tetrafluoroethylene (TFE) units and, based on the total of monomer units, 4.4-6.0 mass% of perfluoro(propyl vinyl ether) (PPVE) units, and which has a melt flow rate at 372°C of 7.5-11.0 g/10 min, determined according to the method defined in the description, and has a total number of -CF=CF$_2$, -CF$_2$H, -COF, -COOH, -COOCH$_3$, CONH$_2$ and -CH$_2$OH groups of $\leq$ 40 per 10$^6$ main-chain carbon atoms, determined according to the method defined in the description.

2. An injection molded article, comprising the copolymer of claim 1.

3. A coated electric wire, comprising a coating layer comprising the copolymer of claim 1.

4. A formed article, which comprises the copolymer of claim 1 and is a flowmeter housing, a film, a bottle, an electric wire coating, or a tube.


**Patentansprüche**

1. Copolymer, welches ein fluorhaltiges Copolymer ist, welches Tetrafluorethylen (TFE)-Einheiten und, bezogen auf die Gesamtmenge der Monomereinheiten, 4,4-6,0 Massen-% Perfluor(propylvinylether) (PPVE)-Einheiten umfasst, und welches eine Schmelzflussrate bei 372°C von 7,5-11,0 g/10 min aufweist, bestimmt gemäß dem in der Beschreibung definierten Verfahren, und eine Gesamtzahl an den Gruppen -CF=CF$_2$, -CF$_2$H, -COF, -COOH,-COOCH$_3$, CONH$_2$ und -CH$_2$OR von $\leq$ 40 pro 10$^6$ Hauptketten-Kohlenstoffatomen aufweist, bestimmt gemäß dem in der Beschreibung definierten Verfahren.

2. Spritzgegossener Artikel, umfassend das Copolymer gemäß Anspruch 1.

3. Beschichteter elektrischer Draht, umfassend eine Beschichtungsschicht, umfassend das Copolymer gemäß Anspruch 1.

4. Geformter Artikel, welcher das Copolymer gemäß Anspruch 1 umfasst und ein Gehäuse für einen Durchflussmesser, ein Film, eine Flasche, eine elektrische Drahtbeschichtung oder ein Rohr ist.


**Revendications**

1. Copolymère, qui est un copolymère contenant du fluor comprenant des unités de tétrafluoroéthylène (TFE) et, sur la base du total des unités monomères, de 4,4 à 6,0 % en masse d'unités de perfluoro(propylvinyléther) (PPVE), et qui présente un indice de fluidité à chaud (MFR) à 372 °C de 7,5 à 11,0 g/10 min, déterminé selon la méthode définie dans la description, et présente un nombre total de groupes -CF=CF$_2$, -CF$_2$H, -COF, -COOH, - COOCH$_3$, CONH$_2$ et -CH$_2$OH de $\leq$ 40 par 10$^5$ atomes de carbone de la chaîne principale, déterminé selon la méthode définie dans la description.

2. Article moulé par injection, comprenant le copolymère selon la revendication 1.

3. Fil électrique enrobé, comprenant une couche d'enrobage comprenant le copolymère selon la revendication 1.

4. Article formé, qui comprend le copolymère selon la revendication 1 et est un boîtier de débitmètre, un film, une bouteille, un enrobage de fil électrique ou un tube.

EP 4 299 601 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003048214 A
- JP 2019214641 A